# EUROPEAN PATENT APPLICATION

(11) **EP 2 515 204 A1**
(43) Date of publication of application: **24.10.2012**
(21) Application number: 12174273.8
(22) Date of filing: 09.10.2008
(51) Int. Cl.: G06F 3/02

(54) **A method for controlling an electronic device using large keyboard targets and an electronic device which uses large keyboard targets**

(62) Divisional of application: 08166204.1
(71) Applicant: Research In Motion Limited, Waterloo, ON N2L 3W8 (CA)
(72) Inventor: Perez, Carlos, St. George, Ontario N0E 1N0 (CA); Arastafar, Martin, Kitchener, Ontario N2E 3S8 (CA)
(74) Representative: MERH-IP Matias Erny Reichl Hoffmann

(57) **Abstract**

A method for controlling an electronic device using large keyboard targets and an electronic device which uses large keyboard targets is provided. In one embodiment, there is provided a handheld electronic device having a controller for controlling operations of the electronic device, and a display connected to the controller, as well as a keyboard comprising a plurality of keys connected to the controller. The controller, in a first input mode, is configured to generate a single input in response to activation of any key in a predefined group of keys of the keyboard.

## Description

### TECHNICAL FlELD

The present disclosure relates to input systems for electronic devices, and more particularly to a method for controlling an electronic device using large keyboard targets and an electronic device which uses large keyboard targets.

### BACKGROUND

Handheld electronic devices such as mobile telephones and personal digital assistants (PDAs) and personal computers typically utilize keypads or keyboards. Keypads and keyboards include a number of keys which have one or more inputs or commands mapped to them. Multifunction keys allow the input or command associated with a key to be switch from a primary function (such as a letter or number) to a secondary and/or tertiary function (such as a command or symbol) using a control key such as the ALT, SHIFT, CTRL or Function (F) key to select an alternate function. New functions and commands continue to be added to keypads and keyboards. To maintain or reduce the size of keypads and keyboards, new key configurations and layouts are frequently developed.

There is a trend to design handheld electronic devices with a reduced form factor. As the size of the handheld electronic devices shrink, one frequent design constraint is to maintain or reduce the size of the keypads and keyboards and their keys, meaning that more functions and commands have to be mapped to the same number of keys, or the keys must be made smaller. This design constraint is particularly problematic for handheld electronic devices where key size is already smaller than that of keyboards of portable or desktop computers. Smaller keys can be more difficult for some users during input as they can require more precise typing due to the smaller input surface of the keys and, often, crowding of the keys which results from placing the keys closer together. Typing on such keypads and keyboards may be even more difficult in some use cases, such as when the user is jogging, or otherwise unable to apply the precision in typing which is demanded by a particular application or function.

Thus, there remains a need for improved input systems for electronic devices, and in particular, improved inputs systems for electronic devices having small keys such as handheld electronic devices.

### BRIEF DESCRIPTION OF THE DRAWINGS

FIG. 1 is a front view of a handheld electronic device in which example embodiments of the present disclosure can be applied;

FIG. 2 is a block diagram illustrating a mobile communication device in which example embodiments of the present disclosure can be applied;

FIG. 3A is a front view of a reduced keyboard with which example embodiments of the present disclosure can be applied;

FIG. 3B is a front view of a full keyboard with which example embodiments of the present disclosure can be applied;

FIG. 3C is a front view of a handheld electronic device with a reduced keyboard having an illustration of the key groups displayed on its display screen;

FIG. 4A is a flowchart illustrating example operations for controlling the operation of the handheld electronic device using large keyboard targets in accordance with one embodiment of the present disclosure;

FIG. 4B is a flowchart illustrating example operations for controlling the operation of the handheld electronic device using large keyboard targets in accordance with a second embodiment of the present disclosure; and

FIG. 5 is an example graphical user interface showing a text entry mode displayed on a display screen of the device of FIG. 2 in accordance with one embodiment of the present disclosure.

### DETAILED DESCRIPTION OF EXAMPLE EMBODIMENTS

The present disclosure is directed to a method and handheld electronic device which map one input to a group of keys to increase the input surface of the electronic device which is available to the device user, thereby reducing the amount of attention and/or precision in typing which is demanded by a particular application or function in use. This effect can be improved if the group of keys are adjacent to each other, such as if the group of keys are side-by-side (whether left-right or up-down relation) each other in the keyboard, or if the group of keys are defined by one or more rows or columns of keys in the keyboard. The grouping of keys in this manner creates larger keyboard targets for the device user, and therefore facilitates visual recognition of the keyboard targets as well as input or command selection for a user.

Mapping a single input to a group of keys may be particularly advantageous in input modes of electronic device having a few commands which are more frequently used such as, for example, in controlling the operation of a digital media player where the commands of previous track (reverse), play (pause), and next track (fast forward) are the most commonly used. For example, in a media player mode of the handheld electronic device, each of these commands is mapped to a group of keys to form a larger keyboard target area. Each key in a group of keys behaves as a single key, producing the same input or command when depressed as any other key in that group. Using the groups of keys the user can control the operation of the media player. However, in other input modes, such as in a text entry mode, each key in a group of keys generates distinct inputs associated with each key in the normal way.

In accordance with one embodiment of the present disclosure, there is provided a handheld electronic device, having a controller comprising at least one processor for controlling operation of the electronic device, a display connected to the controller, a keyboard comprising a plurality of keys connected to the controller, the controller, in a first input mode, being configured to generate a single input in response to activation of any key in a predefined group of keys of the keyboard.

In accordance with another embodiment of the present disclosure, there is provided a method of controlling a handheld electronic device having a controller comprising at least one processor for controlling operation of the electronic device, a display connected to the controller, and a keyboard comprising a plurality of keys connected to the controller, the method including the steps of when the handheld electronic device is in a first input mode, associating a predefined group of keys of the keyboard with a single input, and generating the single input in response to activation of any of the keys in the predefined group of keys.

In accordance with a further embodiment of the present disclosure, there is provided a computer program product comprising a computer readable medium carrying thereon executable program code for controlling a handheld electronic device, the handheld electronic device having a controller comprising at least one processor for controlling operation of the electronic device, a display connected to the controller, and a keyboard comprising a plurality of keys connected to the controller, the executable program code causing the handheld electronic device to perform the described methods.

In accordance with a further embodiment of the present disclosure, there is provided a handheld electronic device, comprising: a controller comprising at least one processor for controlling operations of the electronic device; a memory connected to the controller having a media player module stored thereon for providing a media player application in a media player mode of the device; a display connected to the controller; a keyboard comprising a plurality of keys connected to the controller; the controller, in a media player mode, being configured to: (i) associate a first predefined group of keys of the keyboard with a previous track command to play a previous track in a playlist of the media player application; (ii) associate a second predefined group of keys of the keyboard with a pause command to pause a current track undergoing playback and a play command to commence playback of a current track whose playback is paused; (iii) associate a third predefined group of keys of the keyboard with a next track command to play a next track in the playlist; (iv) commence playback of the previous track in the playlist in response to activation of a key in the first predefined group of keys; (v) pause playback of the current track in response to activation of a key in the second predefined group of keys when playback of the current track is in progress; (vi) commence playback of the current track in response to activation of a key in the second predefined group of keys when playback of the current track is paused; and (viii) commence playback of the next track in the playlist in response to activation of a key in the third predefined group of keys.

In accordance with a further embodiment of the present disclosure, there is provided a method of controlling a media player mode on an electronic device, the electronic device having a controller comprising at least one processor for controlling operation of the electronic device, a display connected to the controller, and a keyboard comprising a plurality of keys connected to the controller, the method comprising the steps of associating a first predefined group of keys of the keyboard with a previous track command to play a previous track in a playlist of the media player application, associating a second predefined group of keys of the keyboard with a pause command to pause a current track undergoing playback and a play command to commence playback of a current track whose playback is paused, associating a third predefined group of keys of the keyboard with a next track command to play a next track in the playlist, commencing playback of the previous track in the playlist in response to activation of a key in the first predefined group of keys, pausing playback of the current track in response to activation of a key in the second predefined group of keys when playback of the current track is in progress, commencing playback of the current track in response to activation of a key in the second predefined group of keys when playback of the current track is paused, and commencing playback of the next track in the playlist in response to activation of a key in the third predefined group of keys.

In accordance with a further embodiment of the present disclosure, there is provided a computer program product comprising a computer readable medium carrying thereon executable program code for controlling a media player mode on an electronic device, the electronic device having a controller comprising at least one processor for controlling operation of the electronic device, a display connected to the controller, and a keyboard comprising a plurality of keys connected to the controller, the executable program code causing the handheld electronic device to perform the described methods.

In accordance with a further embodiment of the present disclosure, there is provided a handheld electronic device, comprising: a controller comprising at least one processor for controlling operations of the electronic device; a display connected to the controller; a keyboard comprising a plurality of keys connected to the controller; a touch sensitive contact pad connected to the controller and located beneath the keyboard, the touch sensitive contact pad being configured to detect changes when a conductive object contacts one of the keys in the plurality of keys; the controller, in a first input mode, being configured to generate a single input in response to detection of a conductive object contacting any key in a predefined group of keys of the keyboard.

In some embodiments, the touch sensitive contact pad is configured to detect when a finger contacts one of the keys in the plurality of keys.

In accordance with a further embodiment of the present disclosure, there is provided a method of controlling a handheld electronic device having a controller comprising at least one processor for controlling operation of the electronic device, a display connected to the controller, a keyboard comprising a plurality of keys connected to the controller, and a touch sensitive contact pad connected to the controller and located beneath the keyboard, the touch sensitive contact pad being configured to detect changes when a conductive object contacts one of the keys in the plurality of keys, the method comprising: when the handheld electronic device is in a first input mode, associating a predefined group of keys of the keyboard with a single input, and generating the single input in response to detection of a conductive object contacting any key in a predefined group of keys of the keyboard activation of any of the keys in the predefined group of keys.

The embodiments described herein generally relate to handheld electronic devices such as mobile communications devices; however, the teachings of the present disclosure could be applied to electronic devices outside of the portable and handheld electronic devices. Examples of handheld electronic devices include wireless communication devices such as pagers, cellular phones, Global Positioning System (GPS) navigation devices and other satellite navigation devices, cellular smart-phones, wireless organizers, personal digital assistants and wireless-enabled notebook computers. The handheld electronic device may also be a portable electronic device without wireless communication capabilities such as a handheld electronic game device, digital photograph album and digital camera. Moreover, while the embodiments described herein are directed to handheld electronic devices having keyboards, the teaching of the present disclosure could be applied to electronic devices having keypads, such as the keypad layout based on the ITU standard (ITU E.161). These examples are illustrative only and intended to be non-limiting.

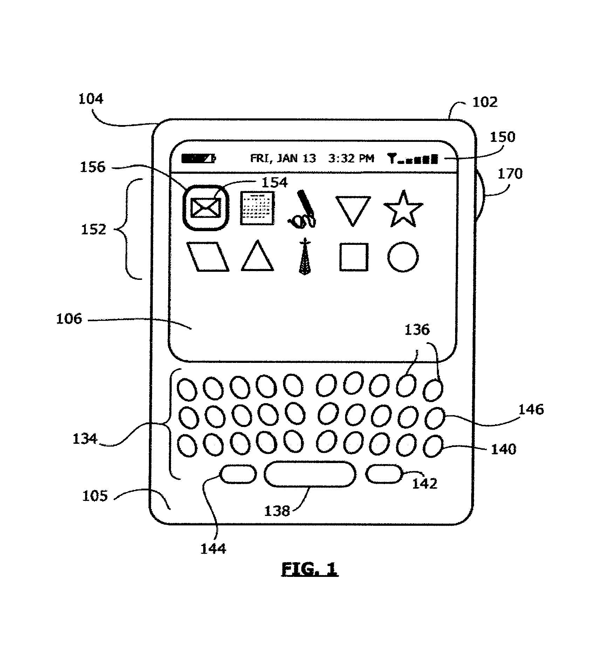

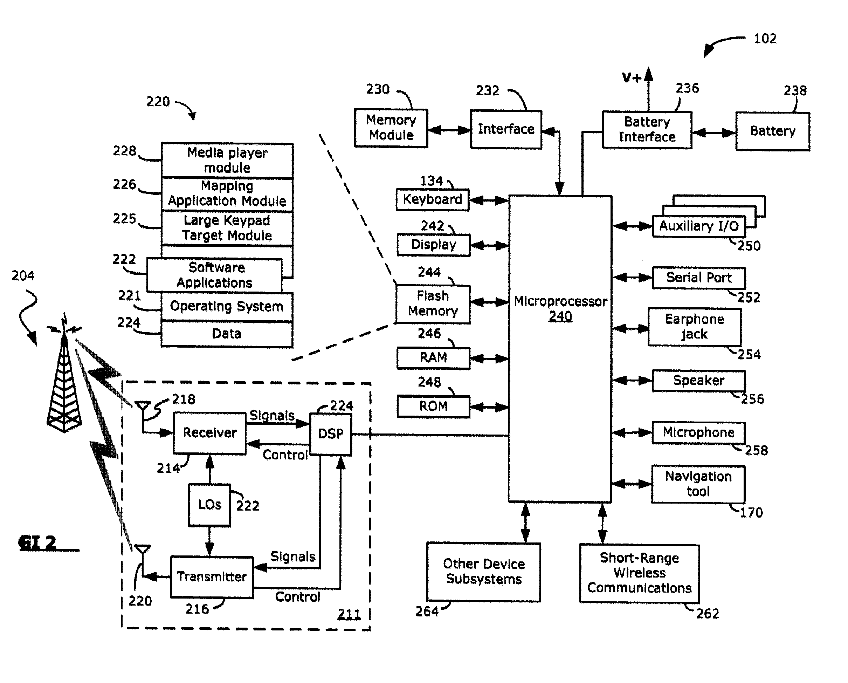

Reference is first made to FIG. 1 and 2 which illustrate a handheld electronic device 102 in which example embodiments described in the present disclosure can be applied. The handheld electronic device 1 02 is a two-way communication device having one or both of data and voice communication capabilities, and the capability to communicate with other computer systems, for example, via the Internet. Depending on the functionality provided by the handheld electronic device 102, in various embodiments the device may be a data communication device, a multiple-mode communication device configured for both data and voice communication, a smartphone, a mobile telephone or a PDA (personal digital assistant) enabled for wireless communication, or a computer system with a wireless modem.

The handheld electronic device 102 includes a rigid case 104 for housing the components of the handheld electronic device 102. The internal components of the handheld electronic device 102 are constructed on a printed circuit board (PCB). The handheld electronic device 102 includes a controller comprising at least one processor 240 (such as a microprocessor) which controls the overall operation of the handheld electronic device 102. The processor 240 interacts with device subsystems such as a communication subsystem 211 which performs communication functions, keyboard 134, display device 242 such as an liquid crystal display (LCD) having a display screen 106, flash memory 244, random access memory (RAM) 246, read only memory (ROM) 248, auxiliary input/output (I/O) subsystems 250, data port 252 such as serial data port (for example, a Universal Serial Bus (USB) data port), earphone jack 254, speaker 256, microphone 258, navigation tool 170, short-range communication subsystem 262, and other device subsystems generally designated as 264. The handheld electronic device 1 02 also includes control buttons (now shown) including a power button, a speaker mute button, and volume up and down buttons.

The navigation tool 170 which may be a rotatable and depressible thumbwheel or scroll wheel, or a depressible (or "clickable") rolling member such as a trackball. Other one or two-dimensional navigation mechanisms may be used for the navigation tool 170 if desired. Although in the shown embodiment the navigation tool 170 is positioned on a side of the handheld electronic device 102 for convenient thumb scrolling by the hand in which the device 102 is held, in other embodiments the navigation tool may be located elsewhere such as centrally below the display screen 106.

The internal components and subsystems of handheld electronic device 102 are housed within the rigid case 104. The case 104 is configured to be held cradle-ably or otherwise held with one or two hands while the device 102 is in use. In the shown embodiment, the case 104 has a housing of unibody construction, but it is also contemplated that the handheld electronic device 102 may be of an alternative construction such as that commonly known as "clamshell" or "flip-phone" style which is comprised of two parts which are pivotally or slidably connected together. Alternatively, the case 104 could be a "slider phone" in which the keyboard is located in a first body which is slide-ably connected to a second body which houses the display screen, the device being configured so that the first body which houses the keyboard can be slide out from the second body for use. In at least some embodiments, the handheld electronic device 102 is small enough to fit inside a standard purse or coat pocket, clip to a belt, and/or mount on a belt-worn holster.

The keys 136 in the keyboard 134 may be constructed using any suitable type of key construction. In some embodiments, the keys 136 are positioned over dome switches (not shown) located on the PCB. Typically, one dome switch is provided for every key 136 on the keyboard 134. However, in other embodiments more than one dome switch or less than one dome switch per key 136 could be used. In yet other embodiments, a touch sensitive contact pad for sensing touch input may be provided and located beneath the keyboard 134 (commonly referred to as a "touch pad"). In at least capacitive touch sensitive contact pads, its controller (or the device processor 240 depending on the embodiment), detects changes in capacitance which result from proximity or nearby presence of a conductive object such as a finger (referred to as finger presence). A support frame (not shown) holds the keyboard 134 and navigation tool 170 in place above the PCB. The support frame also provides an attachment point for the display screen 106. A lens plate typically covers the display screen 106 to prevent damage.

The keys 136 include character keys for inputting characters (alphanumeric characters or symbols such as pound and asterisk) and non-character keys for inputting commands. In some embodiments, at least some of the keys 136 are multifunction keys in some input modes of the device 102. As will be appreciated by persons skill in the art, multifunction keys are keys which have more than one function (inputs and/or commands) associated with them. The one or more alternative functions of a multifunction key 136 are input by activating the respective key 136 in combination with a particular control key as discussed in more detailed below or by changing to a different input mode of the device 102 (e.g. dialing mode rather than a text entry mode). The keys 136 may be directly marked with the characters and/or commands assigned to the keys, or the characters and/or commands may be marked adjacent to key but clearly in association with a particular key.

The keyboard 134 is positioned between a left edge and a right edge of a front face 105 of the device 102. The keys 136 are dimensioned and positioned to be actuated with the thumbs of the user while the device 102 is being held. In some embodiments, the case 104 and device components are configured so that the user can hold the handheld electronic device 102 using both hands and the keys 136 may be actuated using two-thumb typing. In other embodiments, the case 104 and device components are configured so that the handheld electronic device 1 02 can be cradled in the palm of one hand and the keys 136 may be actuated with the thumb of the same hand that is holding the device 102.

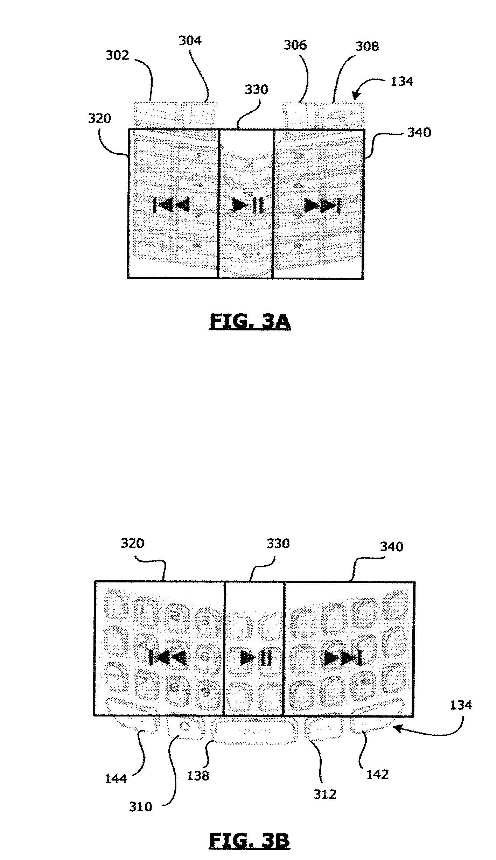

In some embodiments, the keys 136 may have slightly different shapes but are substantially similar in terms of the surface area of the input surface for actuation by the user. In embodiments in which the keys 136 are arranged in an array of rows and columns, the rows and columns may be oriented at right angles to each other to form a grid of mutually perpendicular rows and columns; however more typically the rows and columns are not oriented at right angles and could be arranged diagonally on the front face 105 of the keyboard 134. The rows and columns may be oriented at an angle with respect to each other. The angle may be an acute angle (less than 90°) or an obtuse angle (greater than 90° but less than 180°). In some embodiments, such as that shown in FIG. 3B, the rows and/or columns of keys may not be aligned linearly with respect to each other (i.e., not need be aligned in a straight line), instead the keys 136 may be aligned along a curve such as the rows of keys 136 in FIG. 3B.

Referring again to FIG. 1, the keyboard 134 is positioned below the display screen 106 on which a graphical user interface (GUI) for controlling the operation of the device 102 is presented. The shown GUI illustrates an icon menu selection mode in which a status bar 150 and icon menu 152 are displayed. The status bar 150 includes information such as the current date and time, icon-based notifications, device status and/or device state are displayed. The icon menu 152 includes a plurality of pictorial icon menu items (icons) 154. The icon menu 152 provides the device user with choices of applications or functions that may be run on the handheld electronic device 102. The icon menu items 154 are each selectable to link to, or launch, an associated application or function, or open an associated folder. The icon menu items 154 may, for example, be used to select a media player application, an email messaging application, a calendar application, a notepad application, or other application. The user can select an application to be launched by highlighting or focusing the icon menu item 154 associated with the respective application through movement of an on-screen position indicator 156 commonly referred to as a caret or cursor. The on-screen position indicator 156 may be moved through the icon menu items 154 using the navigation tool 170 (for example, by rotating a scroll wheel or trackball). When an icon menu item 154 is highlighted or focused by the on-screen indicator 156, clicking on or depressing the navigation tool 170 results in selection of the focused item 154.

If the icon menu item 154 represents an application, selecting the menu icon item 154 causes the processor 240 to launch the application logically associated with the icon 154, for example, the email manager application. As will be appreciated by persons skilled in the art, the input action of "clicking" or depressing the navigation tool 170 is translated by the GUI into a request to launch or invoke the application or function, or open the folder associated with the selected icon 154.

The keyboard 134 comprises a plurality of substantially similarly sized keys 136 arranged in a plurality of rows across the front face of the device 1 02 which generate corresponding input signals when activated. The processor 240 is connected to the keyboard 134 for receiving the input signals generated thereby. In at least some embodiments, the keys 136 are arranged in an array of rows and columns. The keyboard 134 also includes an elongated space bar key 138 located centrally below the last row of keys 136 and control keys such as a "CAP" key 142 for capitalizing letters and an "ALT" key 144 for selecting an alternative function of a key 136. In the shown embodiment, the control leys are larger than that the keys 136 and located in the last row of keys with the space bar key 138; however other shapes, sizes and locations for the control keys are contemplated. Other control keys such as "SHIFT" and "CTRL" keys may be provided in addition to or instead of the "ALT" key 144 in other embodiments.

The control keys can be pressed (pressed once or continually held down, depending on the key and device configuration) to provide an alternative meaning or input to one or more the keys 136 in the keyboard 134 or other input component when pressed. As will be appreciated by those skilled in the art, keys that give alternative meaning to other input components enable expanded input capability. Keys that give alternative meaning to other input components also enable expanded input capability such as, for example, the ability to provide for so-called "shortcut keys" or "hot keys".

The keys 136 comprises alphanumeric keys having an alphanumeric input as well as a command keys comprising at least a line feed or "ENTER" key 140 and a "BACKSPACE" key 146 which backs up the cursor when the device is in a text entry mode and removes the previous character input.

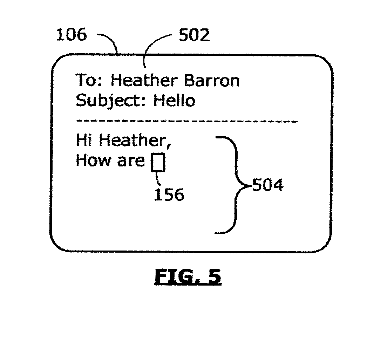

In addition to the other modes described herein, the handheld electronic device 102 can also function in a text input or entry mode. Several device applications will typically have an associated text entry mode such as, for example, email messaging applications, instant messaging applications, task list applications, calendar applications and notepad applications. FIG. 5 shows a text entry mode user interface 502 on the display screen 106 that could be associated with an email messaging application or other application that has a text entry mode. In such visual user interfaces a cursor or on-screen position indicator 156 provides visual feedback as to the current input location in a text field 504. According to example embodiments of the present disclosure, in a text entry mode of device 102, pressing an alphanumeric key 136 causes a an alphanumeric character associated with the respective key 136 to be input and displayed in the text field 504. If the key 136 has more than one alphanumeric character associated with it (i.e., the keyboard 132 is a reduced keyboard), the input/displayed character may be selected in accordance with a predictive text algorithm. Alternatively, the input/displayed character may be selected in accordance whether a particular control key was activated in combination with the key 136 as described above (for example, whether control key and alphanumeric key were activated simultaneously, or whether a control key had been previously activated to invoke an alternate input of the alphanumeric key 136).

Referring again to FIG. 2, the components of the handheld electronic device 102 will now be described in further detail. The handheld electronic device 102 includes a communication subsystem 211 for exchanging radio frequency signals with a wireless network 204 which may comprise one or more of a Wireless Wide Area Network (WWAN) and a Wireless Local Area Network (WLAN) or other suitable network arrangements. The wireless communication subsystem 211 may comprise a WWAN communication subsystem for two-way communication with the WWAN and a WLAN communication subsystem two-way communication with the WLAN. In some embodiments, the handheld electronic device 102 is configured to communicate over both the WWAN and WLAN, and to roam between these networks. In some embodiments, the wireless network 204 may comprise multiple WWANs and WLANs.

The WWAN comprises a wireless network gateway (not shown) which connects the handheld electronic device 102 to the Internet, and through the Internet to a wireless connector system comprising a mobile data server (not shown). The mobile data server may be operated by an enterprise such as a corporation which allows access to a network such as an internal or enterprise network and its resources, or the mobile data server may be operated by a mobile network provider. If the mobile data server is operated by a mobile network service provider, the network may be the Internet rather than an internal or enterprise network.

The wireless network gateway provides translation and routing services between the mobile data server and the WWAN, which facilitates communication between the handheld electronic device 102 and other devices (not shown) connected, directly or indirectly, to the wireless network 204. Accordingly, communications sent via the handheld electronic device 102 are transported via the wireless network 204 to the wireless network gateway. The wireless gateway forwards the communications to the mobile data server via the Internet. Communications sent from the mobile data server are received by the wireless network gateway and transported via the wireless network to the handheld electronic device 102.

The communication subsystem 211 includes a receiver 214, a transmitter 216, and associated components, such as one or more antenna elements 218 and 221, local oscillators (LOs) 222, and a processing module such as a digital signal processor (DSP) 224. The antenna elements 218 and 221 may be embedded or internal to the handheld electronic device 102 and a single antenna may be shared by both receiver and transmitter, as is known in the art. As will be apparent to those skilled in the field of communication, the particular design of the communication subsystem 221 depends on the wireless network 204 in which handheld electronic device 102 is intended to operate.

The handheld electronic device 102 may communicate with any one of a plurality of fixed transceiver base stations (not shown) of the wireless network 204 within its geographic coverage area. The handheld electronic device 102 may send and receive communication signals over the wireless network 204 after the required network registration or activation procedures have been completed. Signals received by the antenna 218 through the wireless network 204 are input to the receiver 214, which may perform such common receiver functions as signal amplification, frequency down conversion, filtering, channel selection, etc., as well as analog-to-digital (A/D) conversion. A/D conversion of a received signal allows more com plex communication functions such as demodulation and decoding to be performed in the DSP 224. In a similar manner, signals to be transmitted are processed, including modulation and encoding, for example, by the DSP 224. These DSP-processed signals are input to the transmitter 216 for digital-to-analog (D/A) conversion, frequency up conversion, filtering, amplification, and transmission to the wireless network 204 via the antenna 221. The DSP 224 not only processes communication signals, but may also provide for receiver and transmitter control. For example, the gains applied to communication signals in the receiver 214 and the transmitter 216 may be adaptively controlled through automatic gain control algorithms implemented in the DSP 224.

The processor 240 operates under stored program control and executes software modules 220 stored in memory such as persistent memory, for example, in the flash memory 244. The software modules 200 comprise operating system software 221 , software applications 222, large keyboard target module 225 for using large keyboard targets for user input from the keyboard 134, media player module 228 for providing a media player application, and mapping application module 226 for providing a mapping application. Those skilled in the art will appreciate that the software modules 220 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely an example, and those skilled in the art will appreciate that a different assignment of functions to types of memory could also be used.

The software applications 222 may include a range of applications, including, for example, an address book application, a messaging application, a calendar application, and/or a notepad application. In some embodiments, the software applications 222 also includes one or more of a Web browser application (i.e., for a Web-enabled mobile communication device 200), an email message application, a push content viewing application, a voice communication (i.e. telephony) application. Each of the software applications 222 may include layout information defining the placement of particular fields and graphic elements (e.g. text fields, input fields, icons, etc.) in the user interface (i.e. the display device 242) according to the application.

The auxiliary I/O subsystems 250 may comprise an external communication link or interface, for example, an Ethernet connection. The handheld electronic device 102 may comprise other wireless communication interfaces for communicating with other types of wireless networks, for example, a wireless network such as an orthogonal frequency division multiplexed (OFDM) network or a GPS transceiver for communicating with a GPS satellite network (not shown). The auxiliary I/O subsystems 250 may comprise a vibrator for providing vibratory notifications in response to various events on the handheld electronic device 102 such as receipt of an electronic communication or incoming phone call, or for other purposes such as haptic feedback (touch feedback).

In some embodiments, the handheld electronic device 102 also includes a removable memory card 230 (typically comprising flash memory) and a memory card interface 232. Network access typically associated with a subscriber or user of the handheld electronic device 102 via the memory card 230, which may be a Subscriber Identity Module (SIM) card for use in a GSM network or other type of memory card for use in the relevant wireless network type. The memory card 230 is inserted in or connected to the memory card interface 232 of the handheld electronic device 1 02 in order to operate in conjunction with the wireless network 204.

The handheld electronic device 102 stores data 224 in an erasable persistent memory, which in one example embodiment is the flash memory 244. In various embodiments, the data 224 includes service data comprising information required by the handheld electronic device 102 to establish and maintain communication with the wireless network 204. The data 224 may also include user application data such as email messages, address book and contact information, calendar and schedule information, notepad documents, image files, and other commonly stored user information stored on the handheld electronic device 102 by its user, and other data. The data 224 stored in the persistent memory (e.g. flash memory 244) of the handheld electronic device 102 may be organized, at least partially, into a number of databases each containing data items of the same data type or associated with the same application. For example, email messages, contact records, and task items may be stored in individual databases within the device memory.

The serial data port 252 may be used for synchronization with a user's host computer system (not shown). The serial data port 252 enables a user to set preferences through an external device or software application and extends the capabilities of the handheld electronic device 1 02 by providing for information or software downloads to the handheld electronic device 102 other than through the wireless network 204. The alternate download path may, for example, be used to load an encryption key onto the handheld electronic device 1 02 through a direct, reliable and trusted connection to thereby provide secure device communication.

In some embodiments, the handheld electronic device 102 is provided with a service routing application programming interface (API) which provides an application with the ability to route traffic through a serial data (i.e., USB) or Bluetooth® connection to the host computer system using standard connectivity protocols. When a user connects their handheld electronic device 102 to the host computer system via a USB cable or Bluetooth® connection, traffic that was destined for the wireless network 204 is automatically routed to the handheld electronic device 102 using the USB cable or Bluetooth® connection. Similarly, any traffic destined for the wireless network 204 is automatically sent over the USB cable Bluetooth® connection to the host computer system for processing.

The handheld electronic device 102 also includes a battery 238 as a power source, which is typically one or more rechargeable batteries that may be charged, for example, through charging circuitry connected to a battery interface such as the serial data port 252. The battery 238 provides electrical power to at least some of the electrical circuitry in the handheld electronic device 102, and the battery interface 236 provides a mechanical and electrical connection for the battery 238. The battery interface 236 is connected to a regulator (not shown) which provides power V+ to the circuitry of the handheld electronic device 102.

The short-range communication subsystem 262 is an additional optional component which provides for communication between the handheld electronic device 102 and different systems or devices, which need not necessarily be similar devices. For example, the subsystem 262 may include an infrared device and associated circuits and components, or a wireless bus protocol compliant communication mechanism such as a Bluetooth® communication module to provide for communication with similarly-enabled systems and devices (Bluetooth® is a registered trademark of Bluetooth SIG, Inc.).

The handheld electronic device 102 may include a personal information manager (PIM) application having the ability to organize and manage data items relating to a user such as, but not limited to, instant messaging, email, calendar events, voice mails, appointments, and task items. The PIM application has the ability to send and receive data items via the wireless network 204. In some example embodiments, PIM data items are seamlessly combined, synchronized, and updated via the wireless network 204, with the user's corresponding data items stored and/or associated with the user's host computer system, thereby creating a mirrored host computer with respect to these data items.

The handheld electronic device 102 may provide two principal modes of communication: a data communication mode and an optional voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email message application and output to the display device 242. A user of the handheld electronic device 102 may also compose data items, such as email messages, for example, using the keyboard 134 and navigation tool 170 in conjunction with the display device 242 and possibly the auxiliary I/O device 250. These composed items may be transmitted through the communication subsystem 21 over the wireless network 204.

In the voice communication mode, the handheld electronic device 102 provides telephony functions and operates as a typical cellular phone. The overall operation is similar, except that the received signals would be output to the speaker 256 and signals for transmission would be generated by a transducer such as the microphone 222. The telephony functions are provided by a combination of software/firmware (i.e., the voice communication module) and hardware (i.e., the microphone 222, the speaker 256 and input devices). Alternative voice or audio I/O subsystems, such as a voice message recording subsystem, may also be implemented on the handheld electronic device 102. Although voice or audio signal output is typically accomplished primarily through the speaker 256, the display device 242 may also be used to provide an indication of the identity of a calling party, duration of a voice call, or other voice call related information.

### Large Keyboard Targets

FIG. 3A and 3B illustrate two example keyboard configurations with which the teachings of the present disclosure can be applied. FIG. 3A illustrates a keyboard 134 referred to as "reduced keyboard" in which a portion of the keys 136 have multiple alphabetic letters associated with each key. In the shown embodiment, the keyboard 134 has four rows and five columns of substantially similarly sized keys 136 which are generally arranged in an array of rows and columns. Alphabetic letters are assigned to the keys 136 of the top three rows, whereas other characters or commands are assigned to the keys 136 of the bottom row. The top row of keys 136 has the alphabetic letter pairs "QW", "ER", "TY", "UI" and "OP". The second row of keys 136 has the alphabetic letter pairs "AS", "DF", "GH" and "JK". The third row of keys 136 has the alphabetic letter pairs "ZX", "CV" and "BN". The alphabetic letters "L" and "M" each have their own keys, and are located in the second and third rows respectively. The key in the fifth column of the third row does not contain any alphabetic letters. The bottom row includes keys for inputting pound and asterisk symbols as well as a few additional characters and commands.

The keyboard 134 of FIG. 3B also comprises specialized keys including an answer key 302 to answer an incoming voice call, a menu key 304 which invokes context-sensitive menus comprising a list of context-sensitive options, a back key 306 which cancels actions or reverses ("backs up") through previous user interface screens or menus displayed on the display screen 106, and a hang up key 308 to end a voice call.

FIG. 3B illustrates a keyboard 134 referred to as a "full keyboard" in which a portion of the keys 136 have a unique alphabetic letter associated with each key. This one-to-one pairing between letters and keys will be understood to persons of ordinary skill in the art and will not be described in detail herein. In order to facilitate user input, the alphabetic letters are typically configured in a familiar QWERTY, QWERTZ, AZERTY, or Dvorak layout known in the art. In the shown embodiment, the keyboard 134 has four rows of keys. The keyboard 134 comprises three rows of substantially similarly sized keys 136 which are generally arranged in an array of rows and columns. The substantially similarly sized keys 136 are located in the top three rows of the keyboard 134 wherein each row has 10 keys forming 10 columns of keys 136. The fourth (bottom) row of keys in the keyboard 134 comprises five keys consisting of (from the left to right): an "ALT" key 144 for selecting an alternative input or command, a "Zero" key 310 for inputting the number zero (0), a space bar key 138 located centrally below the last row of alphanumeric keys 136, a symbol key 312 for invoking a symbol list for inputting symbols from a predetermined list of symbols, and a "CAP" key 142 for capitalizing letters.

In FIG. 3A and 3B, three groups of keys are defined by columns of substantially similarly sized keys 136 in the keyboard 134. The key groups comprise a left-hand group 320, a centre group 330, and a right-hand group 340. In other embodiments, the key groups may include other keys in the keyboard 134 and not just substantially similarly sized keys 136. It is contemplated that in other embodiments each key 136 in the keyboard 134 may be assigned to a group of keys regardless of whether the keys in each group are the same size and/or shape or a different size and/or shape. For example, in the keyboard 134 of FIG. 3A, the keys 302 and 304 may be included in the left-hand group 320 and the keys 306 and 308 may be included in the right-hand group 340. In the keyboard 134 of FIG. 3B, the keys 144 and 310 may be included in the left-hand 320, the space bar key 138 may be included in the centre group 330, and the keys 312 and 142 may be included in the right-hand group 340.

In accordance with embodiments of the present disclosure, among the software modules 220 resident on the handheld electronic device 102 is a large keyboard target module 225. The large keyboard target module 225 includes instructions for execution by processor 240 for using large keyboard targets for receiving input via the keyboard 134. In various embodiments, the large keyboard target module 225 may, among other things, be a part of the operating system 222, or part of another software application 222. In some embodiments, the functions performed by the large keyboard target module 225 may be distributed among different software modules, rather than integrated into a single module. Furthermore, in some embodiments, at least some of the functions performed by the large keyboard target module 225 may be implemented in firmware of the handheld electronic device 102.

In accordance with the large keyboard target mode, at least a portion of the keyboard 134 of the handheld electronic device 102 is logically separately into two or more groups of keys. Not all keys need to be associated with a group of keys; only a portion of the keys of the keyboard 134. The assignment or membership (also referred to as association) of a particular key in a group of keys will be known to the processor 240 in accordance with the instructions provided by the large keyboard target module 225. When a control signal is generated by a key in the keyboard 134 in response to being depressed, the processor 240 will determine the logical input for that key. If the key is assigned to a key group, the input associated with the key's respective key group will be selected by the processor 240. If the key is not assigned to a key group, the input may be ignored or an associated input is generated by the processor 240, depending on the embodiment and device settings.

For convenience and ease of identifying and/or recognizing key groups, whether by sight and/or touch, the key groups may be assigned in rough spatial terms based on geometric relationships between the keys 136. The groups of keys are usually groups of adjacent keys. Any suitable combination of adjacent keys may be used, for example, groups of three or four adjacent keys may be grouped together. In some embodiments, the groups of keys may be defined by pairs of side-by-side keys (whether left-right or up-down relation), rows of keys, columns of keys, or any combination thereof.

It is also contemplated that the keys in a group may not be adjacent to each other in some embodiments. For example, other key groups in which keys are not adjacent to each other may also be relatively easy for device users to identify and/or recognize by sight and/or touch and so may be suitable as a key group. For example, if the keys of the keyboard 134 are backlit, key groups may be assigned based on the backlight colour of the keys. In such embodiments, different key groups may be recognizable based on the respective backlight colour of the keys. In some embodiments, the backlight colour of each key 136 may be selectable or configurable, for example, by the device user. Backlighting of the keys may be provided using a light (not shown) located behind one or more keys the keyboard 134 and proximate to a transparent portion (not shown) of the one or more keys. The light is positioned behind the key to emit coloured light through the transparent portion (e.g. transparent lens) of the key. Two or more backlight colours may be provided using different coloured lights behind different keys, or by using lights having a configurable or modifiable colour wavelength. In some embodiments, the transparent portion of the keys may have a profile which corresponds in shape to a visual representation of the character(s) and/or command(s) associated with the respective keys. In other embodiments, the backlighting of the keys may be provided using a light located behind one or more keys the keyboard 134 which emits a coloured light about the periphery of the key. Backlighting of the keys as a basis for key groups may be used with any keyboard or keypad type, and with any of the embodiments described in the present disclosure.

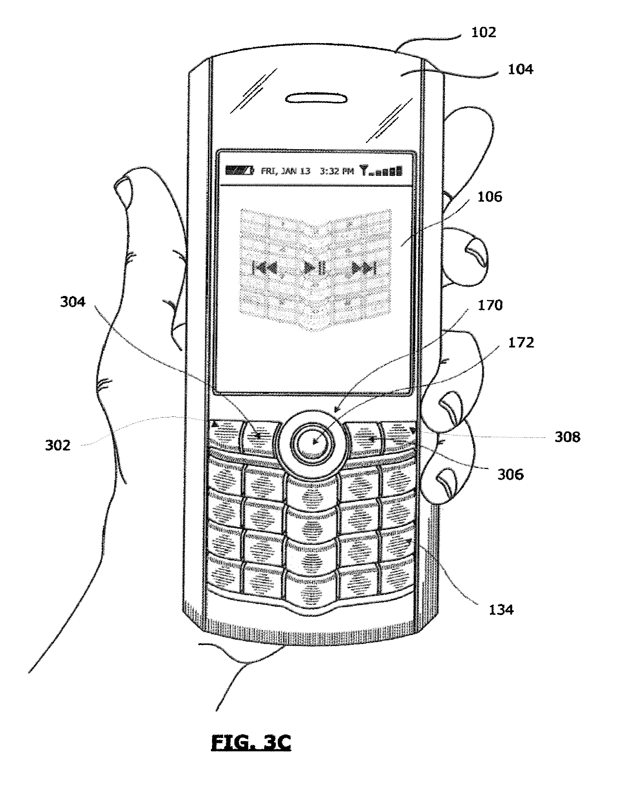

As shown in FIG. 3C, in at least some embodiments an illustration of the key groups may be displayed in a window or pane of the graphical user interface (GUI) of the device 201 which occupies at least a portion of the display 106 of the handheld electronic device 102. In the shown embodiment, the navigation tool 170 is a two-dimensional navigation tool which comprises a depressible (or "clickable") rolling member or trackball 172 which, in some input modes, can be used to move a cursor or focus across selectable items or fields of the GUI of the device 10. The illustration provided by the GUI may assist the user in identifying the various key groups. The illustration of the key groups may be displayed on at least a portion of the display screen 106 for a predetermined duration from the time when the handheld electronic device 102 enters the large keyboard target mode (such as the media player mode or mapping application mode). Alternatively, the illustration of the key groups may be displayed on a portion of the display screen 106 continually while the handheld electronic device 102 is in the large keyboard target mode. If the illustration of the key groups is displayed continually, the illustration is typically restricted to a small portion of the display screen 106 to avoid be intrusive and/or obscuring other onscreen content such as, for example, that associated with the currently application (e.g., a media player application or mapping application). In some embodiments, the illustration of the key groups is displayed in a small horizontal GUI bar extending horizontally across the display screen 106 to at the top or bottom of the display screen 106. The illustration could alternatively be a vertical GUI bar extending vertically across the display screen 106 at the left or right side of the display screen 106.

Given that most keyboards are generally arranged in rows and columns, columns are often the most convenient basis for forming a key group on a handheld electronic device. The columns need not be strictly vertical arrangements of keys, particularly when the layout of a keyboard does not arrange keys in direct vertical columns. Instead, a column of keys can refer to any group of keys defined by their proximity to a line running from the top of the keyboard to the bottom. In other embodiments, the groups of keys may be defined by rows of keys. As in the case of columns, the rows need not be limited to keys directly in line horizontally, but may consist of any group of keys defined by their proximity to a line passing from the left of the keyboard to the right. Moreover, the rows and columns may comprise keys which are aligned in either a liner or non-linear fashion.

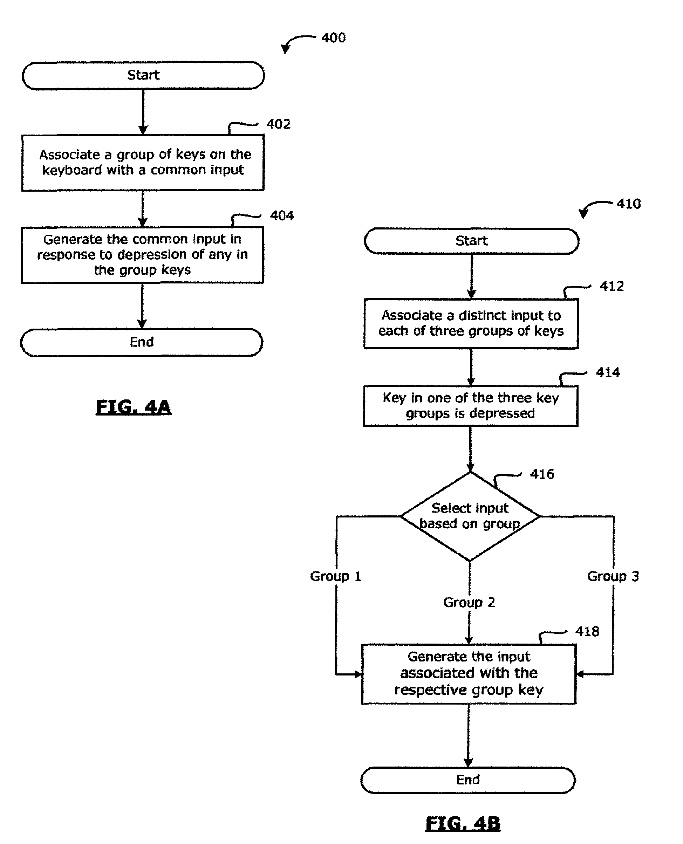

FIG. 4A illustrates example operations 400 for controlling the operation of the handheld electronic device 102 using large keyboard targets in accordance with one embodiment of the present disclosure. In this example embodiment, the operations 400 are carried out by the processor 240 of the handheld electronic device 102 under the instruction of the large keyboard target module 225.

The operations 400 may be used by any application or function of the handheld electronic device 102. In step 402, the large keyboard target module 225 configures the processor 240 when in the large keyboard target input mode to associate a predefined group of keys of the keyboard 134 with a single input. The input may be a predetermined character for text input which may be displayed on the display screen 106 or a predetermined command associated with the application or function for execution by the processor 240. Whether a character or command is associated with the group of keys, and the predetermined character or predetermined command which is associated with the group of keys depends on the particular application or function which with the large keyboard target input mode is used, and possibly the device settings.

Next, in step 404 when any key in the group of keys is depressed, the processor 240 generates the input associated with the group of keys. As noted above, the input may be a predetermined character for text input and display on the display screen 106 of the device 102 or a command associated with the application for execution by the processor 240.

When not in the large keyboard target input mode, the processor 240 is configured to operate in the normal manner. For example, when not in the large keyboard target input mode, in a text entry mode the processor 240 is configured to generate a unique input in response to activation of each key in the keyboard 134. The input may be a predetermined character for text input and display on the display screen 106 of the device 102 or a command associated with the application for execution by the processor 240.

FIG. 4B illustrates example operations 400 for controlling the operation of the handheld electronic device 102 using large keyboard targets in accordance with a second embodiment of the present disclosure. The operations 410 are carried out by the processor 240 of the handheld electronic device 102 under the instruction of the large keyboard target module 225. In this embodiment, the keyboard is logically defined into three groups of keys such as, for example, the left-hand group 320, a centre group 330, and a right-hand group 340 of the keyboards shown in FIG. 3A or FIG. 3B. In the first step 412, for example when the large keyboard target is enabled, each group of keys is associated with distinct inputs.

When a key in one of the three key groups is depressed (step 414), the processor 240 selects the input associated with that key group (decision block 416). Depending on the embodiment and device settings, when a key outside of the three key groups is depressed the input may be ignored or an associated input is generated by the processor 240. The processor 240 then generates the input associated with the respective group key (step 418). If the depressed key is in the first group of keys, the processor 240 generates the input associated with the first group of keys. If the depressed key is in the second group of keys, the processor 240 generates the input associated with the second group of keys. If the depressed key is in the third group of keys, the processor 240 generates the input associated with the third group of keys.

The groups of keys in the large keyboard target mode may by predefined by the device manufacturer or software provider, or the groups may be defined by the device user via an options setting of the large keyboard target module 225. The handheld electronic device 102 may be provided with a default setting for each group, and the user may be able to change definition of the key groups (e.g., number of key groups, and key assignments in each group). The group definition could be selected from one or more predetermined key group settings, or the device user could define select the key which are to be assigned to a particular group. In some cases, the device user could remove a given from being include in a key group (where only a subset of the keys in the keyboard 134 are used in the large keyboard target mode), for example, to preserve a keys normal operation.

In addition, the input associated with each key group may be predefined by the device manufacturer or software provider, or the device user may be able set the input associated with each group of keys via an options setting of the large keyboard target module 225. The handheld electronic device 102 may be provided with a default setting for each group, and the user may be able to change the input associated with each key group.

Thus, the device user may be able to configure the key groups and the input associated with the key groups to customize the operation of the large keyboard target mode to the user preferences. It is complemented that the device user may be able to individually configure the key groups and the input associated with the key groups for each application or function with utilises the keyboard target mode.

In the large target mode, the device 102 does not employ each key on the keyboard to convey distinct logical inputs to the device; instead, the processor generates a single logical input corresponding to each of the two or more groups, thereby creating large keyboard targets for a user attempting to provide input via the keyboard. The provision of large keyboard targets increases the input surface of the electronic device which is available to the device user, thereby reducing the amount of attention and/or precision in typing which is demanded by a particular application or function in use.

### Media Player Control

In accordance with embodiments of the present disclosure, among the software modules 220 resident on the handheld electronic device 102 is a media player module 226. The media player module 226 includes instructions for execution by processor 240 to implement a media player mode of the handheld electronic device 102 in which a media player application is operated on the device 102. In various embodiments, the media player module 226 may, among other things, be a stand-alone software application 222, a part of the operating system 222, or part of another software application 222. In some embodiments, the functions performed by the media player module 226 may be broken up among different software modules, rather than integrated into a single module.

The media player reproduces (also known as playback) media content on the handheld electronic device 102 using audio and/or visual reproduction (playback) means depending on the media content, and possibly other means (e.g. haptic feedback). Audio content is reproduced via the device speaker 256 or is routed to the earphone jack 254 for reproduction on earphones contented to the earphone jack 254. The handheld electronic device 1 02 is typically configured with a speaker bypass function which detects when earphones are connected to the earphone jack 254, and directs any audio output which would normally be sent to the device speaker 256 to the earphone jack 254. Visual content is reproduced on the display screen 106 of the display device. The media player can be a music player, a video player, or a text, hypertext, or image viewing application. The media player module 226 operates by playing media files stored in memory such as the flash memory 244 (which could be fixed internal memory or a removable memory card) or which are streamed to he handheld electronic device 102 from a remote media content store. The removable memory card could be, for example, a MultiMediaCard (MMC) memory card such as a Secure Digital (SD) card or Micro SD card, a Compact Flash (CF) memory card, or a proprietary memory card.

In the media player mode, functions of the media player may be associated with key groups using the large keyboard target module 225. The media player has several commands which are more frequently used compared with other commands which are less frequently used. At least some of the more frequently used commands may be associated with a key group so that the user need only depress one key in the respective key group to generate the desired command.

In one embodiment, the processor 240 is configured so that in the media player mode, a first group of keys is associated with a "previous track" command which selects the previous audio track in a media player playlist and instructs the processor 240 to begin playing the previous track, a second group of keys is associated with a "pause" command which instructs the processor 240 to pause or suspend playback of a currently playing audio track and a "play" command which instructs the processor 240 to begin playing a currently paused audio track, and a third group of keys is associated with a "next track" command which selects the next audio track in the media player playlist and instructs the processor 240 to begin playing the next track. It will be appreciated that the command associated with the second group of keys in the above described embodiment is context-sensitive, that is, the command associated with the second group of keys depends on whether an audio track is currently being played.

In the case of media without a time component, such as images or text, the media player may respond to the previous track command by displaying the previous image, the previous page of text, the previous text file, or any other unit of media content positioned prior to the current one being displayed. Similarly, it could respond to the next track command by displaying the next image, the next page of text, the next text file, or any other unit of media content positioned after the current one being displayed.

It will be appreciated that the media player playlist may be a list of audio tracks or video files stored on the handheld electronic device 102 or available on the remote media content store. The playlist may be maintained by the media player or a remote content server which manages the remote media content store. The playlist may also refer to a collection of media content files stored in a common directory or folder in the memory of the handheld electronic device 102 rather than a playlist maintained by the media player per se. The playlist may identify audio files, video files, text files, image files, hypertext document files or any combination thereof.

In other embodiments, the processor 240 is configured so that in the media player mode, when an audio track is playing, a further group of keys is associated with a "reverse" command which reverses (backs up) the currently playing audio track to an earlier portion of the audio track, and a second further group of keys is associated with a "fast-forward" command which forwards (advances) the currently playing audio track to a later portion of the audio track. As will be understood by persons skilled in the art, the reverse command operates by offsetting the playback of the current track by several seconds backwards and that the fast-forward command operates by offsetting the playback of the current track by several seconds forward. Holding down a key in the group of keys associated with the reverse or fast-forward commands may incrementally reverse or fast-forward the track by a predetermined amount.

To increase the identification and recognition of the key groups in the keyboard 134, in some embodiments the group of keys associated with the next track command, play/pause command, and previous track command are located in the same relative positions as in the GUI of most digital music players (i.e., left, centre and right respectively). As shown in the keyboards 134 of FIG. 3A and 3B, the next track command is associated with a left-hand group 320 of keys, the play/pause command is associated with a centre group 330 of keys, and the previous track command is associated with a right-hand group 340 of keys.

It will be appreciated that, in some use cases, playing and pausing (i.e., starting and stopping) the playback of an audio track may not be as important as skipping an audio track. For example, while jogging, skipping an audio track may be more important than starting and stopping playback. To accommodate such use cases, in some embodiments the group of keys associated with the next track and previous track commands are larger than that the group of keys associated with the play/pause command. In this way, the most frequently used commands have larger target area (i.e., key input surface for actuation) than the less frequently used commands. In the reduced keyboard 134 of FIG. 3A, the left-hand group 320 of keys associated with the next track command is 2 columns wide, the centre group 330 of keys associated with the play/pause command is only 1 column wide, and the right-hand group 340 of key associated with the previous track command is 2 colum ns wide. In keyboard 134 of FI G. 3A, each column of keys comprises four rows of keys. The keys in the keyboard 134 of FIG. 3A are positioned close together.

In the full keyboard 134 layout of FIG. 3B, the left-hand group 320 of keys associated with the next track command is 4 columns wide, the centre group 330 of keys associated with the play/pause command is only 2 columns wide, and the right-hand group 340 of key associated with the previous track command is 4 columns wide. In keyboard 134 of FIG. 3B, each column of keys comprises three rows of keys. The keys in the keyboard 134 of FIG. 3B are somewhat spaced apart.

In some embodiments, the large keyboard target mode requires enabled before it is used. The large keyboard target mode may be enabled and disabled while in the media player mode by selecting a menu option via the GUI of the device 102 or using a hot key, specialized key, or predetermined key combination. The input required to enable and disable the large keyboard target mode may be the same or different. In other embodiments, the large keyboard target mode is enabled by default. In some embodiments, once the large keyboard target mode is enabled it can be disabled by simultaneously holding down a key in the "next" and "previous" key groups for a predetermined duration such as, for example, 5 seconds.

In some embodiments, when the large keyboard target mode is enabled, an instructional guide is displayed on the display screen 106 of the handheld electronic device 102 to explain the operation of the large keyboard target mode, how to control the media player using the various key groups of the large keyboard target mode, and how to disable the large keyboard target mode if desired.

While the media player has been described primarily as playing audio files, it will be appreciated that the media player may also be used to play video files, and that the operation of the previous track, play/pause, and next track commands in the context of the large keyboard target mode may be applied to the playback of video files in the same manner as for audio tracks described above. Similarly, the operation of the reverse and fast-forward commands may also be applied to the playback of video files in the same manner as for audio tracks described above.

The present disclosure provides an alternative input system for handheld electronic devices, including an input system for controlling a media player on a handheld electronic device. In particular, the present disclosure provides an alternative input system which addresses the problem of locating small keys on a handheld electronic device when the user is preoccupied or otherwise unable to apply the necessary precision in typing, for example, when the device user is exercising (e.g., jogging), or when the handheld electronic device is docked in a cradle and it may be difficult to locate an particular key. The large keyboard target mode, when used in combination with the media player, provides identifiable grouping of keys to create larger keyboard targets thereby facilitating input. Accordingly, when activated by the user, any key within a group provides the same input associated with the respective keyboard target. This is advantageous for controlling applications such as the media player, particularly in circumstances where it is difficult to select an individual key in the keyboard. In the context of a media player application, the large keyboard target mode also addresses the problem of identifying keys associated the "next (track)", "previous (track)" and "pause/play" commands which typically have no graphics or other markings on the keyboard and may be difficult to identify. The provision of larger keyboard target areas makes input selection easier and improves the safety of the device user in some circumstances, such as while using the device when jogging.

While the use of large keyboard targets has been described primarily in the context of a digital media player, it will be appreciated by persons skilled in the art that the method of generating input and controlling the operation of the handheld electronic device 1 02 using large keyboard targets described in the present disclosure may be used in the context of other applications and functions including, but not limited to, a mapping application provided by the mapping application module 228. In addition, while example keyboard layouts and configurations have been described, and example key groups with such keyboards have been described, the present disclosure is intended to cover all keyboard layouts and configurations and any suitable grouping of keys within such keyboard layouts and configurations.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable program m able-read-only memory (EPROM) or flash memory, an optical disc such as a Compact Disc (CD), Digital Versatile Disc (DVD) or Blu-ray^{™} Disc, and a solid state storage device (e.g., NAND flash or synchronous dynamic RAM (SDRAM)).

The various embodiments presented above are merely examples and are in no way meant to limit the scope of this disclosure. Variations of the innovations described herein will be apparent to persons of ordinary skill in the art, such variations being within the intended scope of the present application. In particular, features from one or more of the above-described embodiments may be selected to create alternative embodiments comprised of a subcombination of features which may not be explicitly described above. In addition, features from one or more of the above-described embodiments may be selected and combined to create alternative embodiments comprised of a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.
Embodiments of the present invention may relate to one or more of the following enumerated example embodiments.
1. A handheld electronic device, comprising:
   a controller comprising at least one processor for controlling operations of the electronic device;
   a display connected to the controller;
   a keyboard comprising a plurality of keys connected to the controller;
   the controller, in a first input mode, being configured to generate a single input in response to activation of any key in a predefined group of keys of the keyboard.
2. The handheld electronic device of enumerated example embodiment 1, wherein the controller is further configured to generate a second input in response to activation of any key in a second predefined group of keys of the keyboard, and a third input in response to activation of any key in a third predefined group of keys of the keyboard.
3. The handheld electronic device of enumerated example embodiment 2, wherein the first input mode is a media player mode, wherein the first input is an input to play a previous track in a playlist, the second input is an input to pause a current track undergoing playback or play a current track whose playback is paused, and the third input is an input to play a next track in the media playlist.
4. The handheld electronic device of enumerated example embodiment 2 or enumerated example embodiment 3, wherein each of the three predefined groups of keys is defined by keys in the keyboard which are adjacent to each other.
5. The handheld electronic device of any one of enumerated example embodiments 2 to 4, wherein the keys of the keyboard are generally arranged in an array of rows and columns, wherein each of the three predefined groups of keys are defined by one or more columns of keys in the keyboard.
6. The handheld electronic device of any one of enumerated example embodiments 2 to 5, wherein the keyboard is a reduced keyboard having the plurality of keys arranged in colum ns, wherein the first predefined group of keys is defined by at least a left outer column of keys on a left side of the keyboard, the second predefined group of keys is defined by at least a center column of keys, and the third predefined group of keys is defined by at least a right outer column of keys on the right side of the keyboard.
7. The handheld electronic device of enumerated example embodiment 6, wherein the keypad is a reduced keypad having five columns of keys, wherein the first predefined group of keys is defined by two columns on a left side of the handheld electronic device, the second predefined group of keys is defined by a center column of keys of the handheld electronic device, and the third predefined group of keys is defined by two columns on the right side of the handheld electronic device.
8. The handheld electronic device of any one of enumerated example embodiments 2 to 5, wherein the keyboard is a full keyboard having columns of keys, wherein the first predefined group of keys is defined by four columns on a left side of the handheld electronic device, the second predefined group of keys is defined by two central columns of keys of the handheld electronic device, and the third predefined group of keys is defined by four columns on the right side of the handheld electronic device.
9. The handheld electronic device of any one of enumerated example embodiments 1 to 8, wherein the keys of the keyboard are backlighted, the key groups being defined based on the backlight colour of the keys such that each key group is associated with the same backlight colour.
10. The handheld electronic device of any one of enumerated example embodiments 1 to 9, wherein the controller, in a second input mode, is configured to generate a distinct input in response to activation of each key in the predefined group of keys of the keyboard.
11. A method of controlling a handheld electronic device having a controller comprising at least one processor for controlling operation of the electronic device, a display connected to the controller, and a keyboard comprising a plurality of keys connected to the controller, the method comprising:
   when the handheld electronic device is in a first input mode, associating a predefined group of keys of the keyboard with a single input, and generating the single input in response to activation of any of the keys in the predefined group of keys.
12. The method of enumerated example embodiment 11, further comprising:
   generating a first input in response to activation of any key in a first predefined group of keys of the keyboard;
   generating a second input in response to activation of any key in a second predefined group of keys of the keyboard; and
   generating a third input in response to activation of any key in a third predefined group of keys of the keyboard.
13. The method of enumerated example embodiment 12, wherein the first input mode is a media player mode, wherein the first input is an input to play a previous track in a playlist, the second input is an input to pause a current track undergoing playback or play a current track whose playback is paused, and the third input is an input to play a next track in the media playlist
14. A handheld electronic device, comprising:
   a controller comprising at least one processor for controlling operations of the electronic device;
   a memory connected to the controller having a media player module stored thereon for providing a media player application in a media player mode of the device;
   a display connected to the controller;
   a keyboard comprising a plurality of keys connected to the controller;
   the controller, in a media player mode, being configured to: (i) associate a first predefined group of keys of the keyboard with a previous track command to play a previous track in a playlist of the media player application; (ii) associate a second predefined group of keys of the keyboard with a pause command to pause a current track undergoing playback and a play command to commence playback of a current track whose playback is paused; (iii) associate a third predefined group of keys of the keyboard with a next track command to play a next track in the playlist; (iv) commence playback of the previous track in the playlist in response to activation of a key in the first predefined group of keys; (v) pause playback of the current track in response to activation of a key in the second predefined group of keys when playback of the current track is in progress; (vi) commence playback of the current track in response to activation of a key in the second predefined group of keys when playback of the current track is paused; and (viii) commence playback of the next track in the playlist in response to activation of a key in the third predefined group of keys.
15. A handheld electronic device, comprising:
   a controller comprising at least one processor for controlling operations of the electronic device;
   a display connected to the controller;
   a keyboard comprising a plurality of keys connected to the controller;
   a touch sensitive contact pad connected to the controller and located beneath the keyboard, the touch sensitive contact pad being configured to detect changes when a conductive object contacts one of the keys in the plurality of keys;
   the controller, in a first input mode, being configured to generate a single input in response to detection of a conductive object contacting any key in a predefined group of keys of the keyboard.

## Claims

1. An electronic device (102), comprising:
a controller (240) comprising at least one processor for controlling operations of the electronic device;
a display (242) connected to the controller;
a keyboard (134) comprising a plurality of keys connected to the controller;
a touch sensitive contact pad connected to the controller, the touch sensitive contact pad being configured to detect changes when a conductive object contacts one of the keys in the plurality of keys;
the controller, in a first input mode, being configured to generate a single input in response to detection of a conductive object contacting any key in a predefined group of keys of the keyboard.

2. The electronic device of claim 1 wherein the touch sensitive contact pad is configured to detect when a finger contacts one of the keys in the plurality of keys.

3. The electronic device of claim 1 or 2, wherein the controller is further configured to generate a second input in response to detection of a conductive object contacting any key in a second predefined group of keys of the keyboard, and a third input in response detection of a conductive object contacting any key in a third predefined group of keys of the keyboard.

4. The electronic device of claim 3, wherein the first input mode is a media player mode, wherein the first input is an input to play a previous track in a playlist, the second input is an input to pause a current track undergoing playback or play a current track whose playback is paused, and the third input is an input to play a next track in the media playlist.

5. The electronic device of claim 3 or claim 4, wherein each of the three predefined groups of keys is defined by keys in the keyboard which are adjacent to each other.

6. The electronic device of any one of claims 3 to 5, wherein the keys of the keyboard are generally arranged in an array of rows and colum ns, wherein each of the three predefined groups of keys are defined by one or more columns of keys in the keyboard.

7. The electronic device of any one of claims 3 to 6, wherein the keyboard is a reduced keyboard having the plurality of keys arranged in columns, wherein the first predefined group of keys is defined by at least a left outer column of keys on a left side of the keyboard, the second predefined group of keys is defined by at least a center column of keys, and the third predefined group of keys is defined by at least a right outer column of keys on the right side of the keyboard.

8. The electronic device of claim 6, wherein the keypad is a reduced keypad having five columns of keys, wherein the first predefined group of keys is defined by two columns on a left side of the electronic device, the second predefined group of keys is defined by a center column of keys of the electronic device, and the third predefined group of keys is defined by two columns on the right side of the electronic device.

9. The electronic device of any one of claims 3 to 6, wherein the keyboard is a full keyboard having columns of keys, wherein the first predefined group of keys is defined by four columns on a left side of the electronic device, the second predefined group of keys is defined by two central columns of keys of the electronic device, and the third predefined group of keys is defined by four columns on the right side of the electronic device.

10. The electronic device of any one of claims 1 to 9, wherein the keys of the keyboard are backlighted, the key groups being defined based on the backlight colour of the keys such that each key group is associated with the same backlight colour.

11. The electronic device of any one of claims 1 to 10, wherein the controller, in a second input mode, is configured to generate a distinct input in response to detection of a conductive object contacting each key in the predefined group of keys of the keyboard.

12. A method of controlling an electronic device (102) having a controller comprising at least one controller (240) for controlling operation of the electronic device, a display (242) connected to the controller, a keyboard (134) comprising a plurality of keys (136) connected to the controller, and a touch sensitive contact pad connected to the controller, the touch sensitive contact pad being configured to detect changes when a conductive object contacts one of the keys in the plurality of keys, the method comprising:
when the electronic device is in a first input mode, associating (402) a predefined group of keys of the keyboard with a single input, and
generating (404) the single input in response to detection of a conductive object contacting any key in a predefined group of keys of the keyboard in the predefined group of keys.

13. The method of claim 12 further comprising:
generating a second input in response to detection of a conductive object contacting any key in a second predefined group of keys of the keyboard, and a third input in response detection of a conductive object contacting any key in a third predefined group of keys of the keyboard.

14. The method of claims 12 or 13, further comprising, when the electronic device is in a second input mode, generating a distinct input in response to detection of a conductive object contacting each key in the predefined group of keys of the keyboard.
